# EUROPEAN PATENT APPLICATION

(11) **EP 3 113 129 A1**
(43) Date of publication of application: **04.01.2017**
(21) Application number: 16177548.1
(22) Date of filing: 01.07.2016
(51) Int. Cl.: G07G 1/14, G06Q 20/18, G06Q 20/20, G07G 1/00

(54) **CHECK-OUT SYSTEM, PAYMENT APPARATUS, INPUT PROCESSING APPARATUS, AND CONTROL PROGRAM**

(30) Priority: 01.07.2015 JP 2015132822
(71) Applicant: Toshiba TEC Kabushiki Kaisha, Tokyo 141-0032 (JP)
(72) Inventor: NAMURA, Shinya, Shinagawa-ku, Tokyo 141-8562 (JP)
(74) Representative: Takeuchi, Maya

(57) **Abstract**

A check-out system described herein includes a plurality of payment apparatus in communication with each other and with a registration apparatus. The registration apparatus includes a registration input apparatus and a registration processor. Each payment apparatus includes a storage unit that stores payment information for a transaction received from the registration apparatus, an input apparatus that receives an instruction from an operator to start payment processing, and a payment processor. The payment processor is configured to respond to an instruction received in the input apparatus by processing a payment in accordance with the payment information stored in the storage unit, and send a delete instruction to each of the other payment apparatus in the system to delete the payment information from the respective storage units. The payment information stored in the storage unit is deleted when a delete command is received from one of the other payment apparatus of the system.

## Description

### FIELD

Embodiments described herein relate generally to a check-out system that includes a payment apparatus and an input processing apparatus, and a control program that causes a computer to implement functions of the payment apparatus.

### BACKGROUND

In a known check-out system for a mass retailer, an input processing apparatus for merchandise data and a payment apparatus for transactions are separated. The input processing apparatus waits for the input of data relating to merchandise sales. When data is input by an operator, the input processing apparatus generates payment information based on the data, and transmits the payment information to the payment apparatus. The payment apparatus waits for the input of payment data for the payment information. When the payment data is input by the operator, the payment apparatus processes payment based on the payment information and the payment data. If the check-out system includes the input processing apparatus for merchandise data separate from the payment apparatus for transactions, a salesperson can operate the input processing apparatus and a shopper can operate the payment apparatus in a semi-self-service arrangement.

In the semi-self-service arrangement, it may take more time for the shopper to operate the payment apparatus. Thus, it is desirable to substantially eliminate the situation in which a subsequent shopper has to wait for payment. For this reason, in conventional systems the number of payment apparatuses may be larger than the number of input processing apparatuses. In one arrangement, an input processing apparatus monitors the status of each payment apparatus, automatically selects an unoccupied payment apparatus, and transmits the payment information to the selected payment apparatus. In another arrangement, the state of each payment apparatus is displayed on the display of the input processing apparatus, a salesperson selects an unoccupied payment apparatus, and the payment information is transmitted to the payment apparatus.

In either arrangement, since the input processing apparatus monitors the status of each payment apparatus, the input processing apparatus is required to have an information analysis function of collecting and analyzing the status of the payment apparatus.

### DESCRIPTION OF THE DRAWINGS

FIG. 1 is a schematic view of a check-out system according to an embodiment.
FIG. 2 is a block diagram illustrating circuit configurations of a merchandise registration apparatus and a payment apparatus according to the embodiment.
FIG. 3 is a schematic view illustrating a table stored in RAM of the merchandise registration apparatus.
FIG. 4 is a schematic view illustrating buffer items stored in the RAM of the payment apparatus.
FIG. 5 is a flow chart illustrating an example sequence of operations performed by a CPU of the merchandise registration apparatus in accordance with a control program.
FIG. 6 is a schematic view illustrating an example of a registration screen displayed on a display of the merchandise registration apparatus.
FIG. 7 is a schematic view illustrating an example of a transmission screen displayed on the display of the merchandise registration apparatus.
FIG. 8 is a flow chart illustrating an example sequence of operations performed by a CPU of the payment apparatus in accordance with a control program.
FIG. 9 is a schematic view illustrating an example of a start receiving screen displayed on the panel of the payment apparatus.
FIG. 10 is a schematic view illustrating an example of a payment screen displayed on the panel of the payment apparatus.

### DETAILED DESCRIPTION

According to embodiments described herein, a check-out system includes a plurality of payment apparatuses in communication with each other and with a registration apparatus. The registration apparatus includes a registration input apparatus configured to receive input of data corresponding to an item for a transaction and a registration processor configured to generate payment information for the transaction based on the input data and to cause the payment information to be transmitted to each of the payment apparatuses. Each payment apparatus includes a storage unit that stores payment information for a transaction received from the registration apparatus, an input apparatus that receives an instruction from an operator to start payment processing, and a payment processor. The payment processor is configured to respond to an instruction received by the input apparatus by processing a payment in accordance with the payment information stored in the storage unit, and sending a delete instruction to each of the other payment apparatuses in the system to delete the payment information from the respective storage units. Each payment apparatus is configured to delete payment information stored in the storage unit when a delete command is received from one of the other payment apparatuses of the system.

According to the present invention, the registration apparatus is configured to transmit the payment information to all of the payment apparatuses, regardless of the state of each payment apparatus. Therefore, an information analysis function of collecting and analyzing state information (status) from the payment apparatus is no more required. In addition, since a salesperson operating the registration apparatus does not have trouble in finding an unoccupied payment apparatus, it is possible to increase the speed of payment processing and work efficiency of the salesperson. It also makes it possible to prevent transmission errors when transmitting the payment information to the payment apparatus.

Preferably, the storage unit sequentially stores different payment information in the storage area in an ascending order of reception time.

Preferably, the payment processor processes payment for the payment information having an earliest reception time among the reception times of the different payment information stored in the storage unit.

Preferably, the payment processor deletes the payment information having an earliest reception time among the reception times of the different payment information stored in the storage unit, in response to the delete command being received.

Preferably, the plurality of payment apparatuses are in communication with each other and with the registration apparatus via a network.

Preferably, the payment processor stores a destination address of the other payment apparatuses receiving the payment information.

Preferably, the registration input apparatus is one of a code scanner and an image recognition scanner.

Preferably, the payment information is transmitted to each of the payment apparatuses in parallel.

The present invention also relates to a payment apparatus for use in a check-out system including a plurality of the payment apparatuses in communication with each other and with a registration apparatus, the payment apparatus including: a storage unit configured to store payment information for a transaction received from the registration apparatus; an input apparatus configured to receive an instruction from an operator to start payment processing; and a payment processor configured to: in response to the instruction received in the input apparatus, process a payment in accordance with the payment information stored in the storage unit, and send a delete instruction to each of the other payment apparatuses in the check-out system to delete the payment information from the respective storage units, and delete the payment information stored in the storage unit when a delete command is received from one of the other payment apparatuses of the check-out system.

Preferably, the storage unit sequentially stores different payment information in the storage area in an ascending order of reception time.

Preferably, the payment processor processes payment for the payment information having an earliest reception time among the reception times of the different payment information stored in the storage unit.

Preferably, the payment processor deletes the payment information having an earliest reception time among the reception times of the different payment information stored in the storage unit, in response to the delete command being received.

Preferably, the payment apparatus is in communication with the plurality of payment apparatuses and with the registration apparatus in the system via a network.

Preferably, the payment processor stores a destination address of the other payment apparatuses receiving the payment information.

The present invention further relates to a non-transitory computer readable medium containing instructions for a payment apparatus in a system including a plurality of the payment apparatuses in communication with each other and with a registration apparatus, the instructions causing the payment apparatus to perform the steps of: storing payment information for a transaction received from the registration apparatus; receiving an instruction from an operator to start payment processing; in response to receiving the instruction, processing a payment in accordance with the stored payment information, and sending a delete instruction to each of the other payment apparatuses in the system to delete the payment information; and deleting the payment information when a delete command is received from one of the other payment apparatuses of the system.

Preferably, the instructions cause the payment information for different transactions to be stored in an ascending order of reception time.

Preferably, instructions cause payment to be processed first for the payment information having an earliest reception time among the reception times of the different payment information.

Preferably, the instructions cause the payment information having an earliest reception time among the reception times of the different stored payment information to be deleted first, in response to the delete command being received.

Preferably, instructions cause the payment apparatus to be in communication with the plurality of payment apparatuses and with the registration apparatus in the system via a network.

Preferably, the instructions cause the payment apparatus to store a destination address of the other payment apparatuses receiving the payment information.

Hereinafter, a description will be given, as non-limiting examples, with reference to the drawings, of an embodiment of a check-out system in which an input processing apparatus is not required to collect the status of each payment apparatus.

In this embodiment, a semi-self-service check-out system which is provided in a store such as a mass retailer is exemplified. In this system, a salesperson operates a merchandise registration apparatus which is an aspect of the input processing apparatus. A shopper operates the payment apparatus.

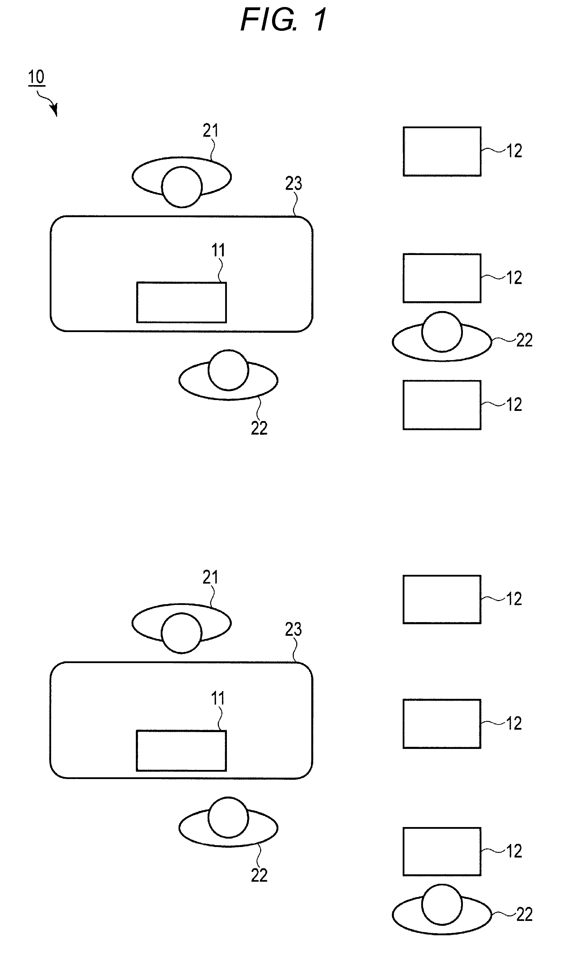

FIG. 1 is a schematic view of a check-out system 10 according to an embodiment. The check-out system 10 includes a plurality of merchandise registration apparatuses 11, and payment apparatuses 12 of a number larger than the number of the merchandise registration apparatuses 11. The merchandise registration apparatuses 11 and the payment apparatuses 12 are arranged in check-out lanes in a store.

FIG. 1 illustrates a case where two merchandise registration apparatuses 11 and six payment apparatuses 12 are arranged in two check-out lanes. In FIG. 1, one merchandise registration apparatus 11 and three payment apparatuses 12 are arranged for one check-out lane. The number of merchandise registration apparatuses 11 and payment apparatuses 12 which are included in the check-out system 10 is arbitrary. The ratio between the number of merchandise registration apparatuses 11 and the number payment apparatuses 12, which are arranged in the check-out lane, is arbitrary.

The operator of the merchandise registration apparatus 11 is a salesperson 21 who serves as a checker. The operator of the payment apparatus 12 is a shopper 22 who purchases merchandise sold at the store. In addition, the salesperson 21 may operate the payment apparatus 12 in some cases.

The merchandise registration apparatus 11 is attached to a work table 23 in FIG. 1. The work table 23 has a rectangular top plate. A plurality of work tables 23 are arranged so as to be substantially parallel in the longitudinal directions of the top plates to form passages (checkout lanes) for shoppers 22.

The merchandise registration apparatus 11 performs the following functions: registration of purchase merchandise, generation of payment information, and transmission of the payment information to the payment apparatus 12. In the registration process, the shopper 22 or salesperson 21 registers merchandise that the shopper 22 has selected as purchase merchandise.

The payment apparatus 12 performs the payment process based on the payment information, according to the payment information received from the merchandise registration apparatus 11. In the payment process, the transaction for purchasing the merchandise is settled. The payment information is required in the payment process.

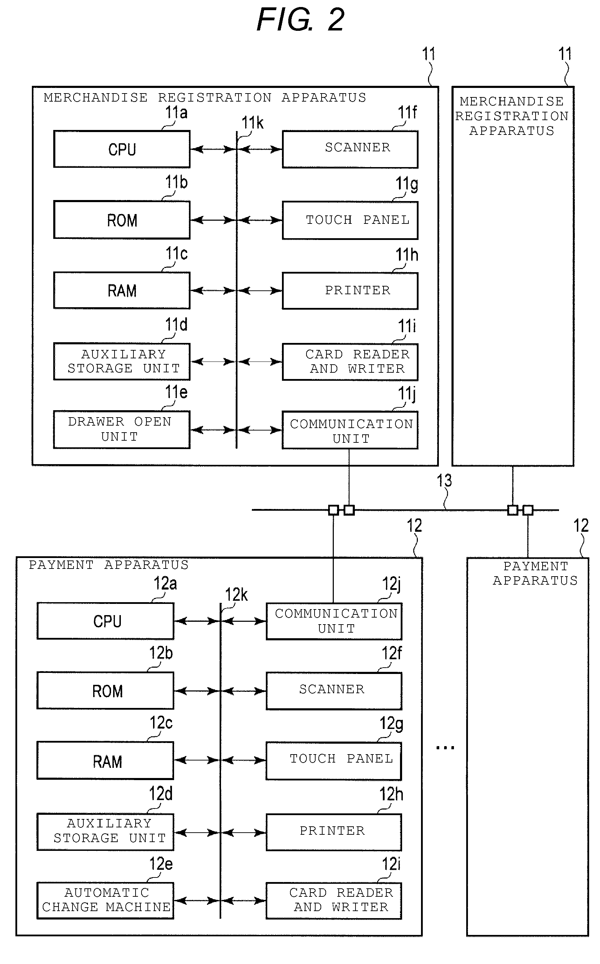

FIG. 2 is a block diagram illustrating the respective circuit configurations of the merchandise registration apparatus 11 and the payment apparatus 12. The merchandise registration apparatus 11 and the payment apparatus 12 are connected to each other through a network 13 such as a local area network (LAN). Other networks such as the Internet or a wireless LAN can be used for the network 13, instead of the LAN. Alternatively, the merchandise registration apparatus 11 and the payment apparatus 12 may be configured to exchange information through a server or via a direct connection (wired or wireless).

The merchandise registration apparatus 11 includes a central processing unit (CPU) 11 a, a read only memory (ROM) 11 b, a random access memory (RAM) 11c, an auxiliary storage unit 11 d, a drawer open unit 11e, a scanner 11f, a touch panel 11 g, a printer 11 h, a card reader and writer 11i, a communication unit 11j, and a transmission system 11 k.

The CPU 11a, the ROM 11 b, the RAM 11c and the auxiliary storage unit 11 d are connected by the transmission system 11 k, and may be provided as a computer.

The CPU 11a corresponds to the central processor of the computer. The CPU 11a controls respective units so as to achieve various functions of the merchandise registration apparatus 11, based on the operating system, the middleware, and the application programs, which are stored in the ROM 11 b and the RAM 11c.

The ROM 11 b corresponds to the main memory storage portion of the computer. The ROM 11 b stores the operating system. The ROM 11 b may store the middleware and application programs in some cases. Further, the ROM 11 b may also store data that is referred to when the CPU 11a performs various processes.

The RAM 11c corresponds to the main working memory portion of the computer. The RAM 11c stores data that is referred to when the CPU 11a performs various processes. Further, the RAM 11c is utilized as a so-called work area for storing data that is temporarily used when the CPU 11a performs various processes.

The auxiliary storage unit 11 d corresponds to the auxiliary memory portion of the computer. The auxiliary storage unit 11d stores data that is used when the CPU 11a performs various processes or data that is generated through the process performed by the CPU 11a. As the auxiliary storage unit 11 d, for example, an electric erasable programmable read only memory (EEPROM), a hard disk drive (HDD), a solid state drive (SSD), or the like may be used.

The application program stored in the ROM 11 b or the auxiliary storage unit 11 d includes a control program for controlling a control process to be described later. Transport and installation of the merchandise registration apparatus 11 is generally performed in the state where the control program is stored in the ROM 11 b or the auxiliary storage unit 11 d. However, the transport and installation of the merchandise registration apparatus 11 may be performed in the state where the control program is not stored in the ROM 11b or the auxiliary storage unit 11 d in some cases. In this case, the control program is transferred to the merchandise registration apparatus 11 by being read from a removable recording medium such as a magnetic disk, a magneto-optical disk, an optical disk, and a semiconductor memory. Alternatively, the control program may be transferred through a network and then written into the auxiliary storage unit 11 d of the merchandise registration apparatus 11.

The drawer open unit 11e automatically opens a drawer that accommodates money.

The scanner 11f reads the information on the merchandise, and obtains the merchandise code of the merchandise. As the scanner 11f, various known types of scanners can be used. The scanner 11f may be only one of various known types, or may include a plurality of types. The scanner 11f may be a two-dimensional code scanner of a fixed type or a moveable type. Alternatively, the scanner 11f may be a scanner of a type that identifies the merchandise from the image of merchandise by using an image recognition technique.

The touch panel 11 g includes a display apparatus and a touch sensor. The display apparatus may display a certain screen such as a GUI screen. As the display apparatus, for example, a well-known device such as a color LCD may be used. The touch sensor is arranged to overlap the display surface of the display apparatus. The touch sensor detects the operator's touch position on the display surface of the display apparatus, and transmits the position information to the CPU 11 a. As the touch sensor, a known device may be used.

The printer 11h issues a receipt by printing various characters and/or images on the receipt paper. For the printer 11 h, for example, a thermal printer, a dot impact printer, or the like may be used.

The card reader and writer 11i reads data recorded on the card and writes data onto the card. The card may include a membership card referred to as a member's card or a point card, in addition to payment cards such as a credit card, a debit card, an electronic money card, and a prepaid card. The membership card has recorded at least information for identifying a member who owns the card. The card reader and writer 11i may be any one of devices of magnetic, contact, and contactless types, and may include a plurality of types of devices.

The communication unit 11j performs data communication with a plurality of payment apparatuses 12 which are connected through the network 13. The communication unit 11j can also perform data communication with other merchandise registration apparatuses 11 through the network 13.

The transmission system 11k transmits data items which are exchanged among the CPU 11a, the ROM 11 b, the RAM 11c, the auxiliary storage unit 11 d, the drawer open unit 11e, the scanner 11f, the touch panel 11 g, the printer 11 h, the card reader and writer 11i, and the communication unit 11j. As the transmission system 11 k, a well-known transmission system including various buses such as a system bus and various interface circuits connecting the buses and respective units may be used.

As hardware of such merchandise registration apparatus 11, for example, a POS terminal which can deal with an existing face-to-face sales type may be used.

The payment apparatus 12 includes a CPU 12a, a ROM 12b, a RAM 12c, an auxiliary storage unit 12d, an automatic change machine 12e, a scanner 12f, a touch panel 12g, a printer 12h, a card reader and writer 12i, a communication unit 12j, and a transmission system 12k.

The CPU 12a, the ROM 12b, the RAM 12c and the auxiliary storage unit 12d are connected by the transmission system 12k and may be provided as a computer.

The CPU 12a corresponds to the central processor of the computer. The CPU 12a controls respective units so as to perform various operations of the payment apparatus 12, based on the operating system, the middleware, and the application programs, which are stored in the ROM 12b and the RAM 12c.

The ROM 12b corresponds to the main memory storing portion of the computer. The ROM 12b stores the operating system. The ROM 12b may store the middleware and application programs in some cases. Further, the ROM 12b may also store data that is referred to when the CPU 12a performs various processes.

The RAM 12c corresponds to the main working memory portion of the computer. The RAM 12c stores data that is referred to when the CPU 12a performs various processes. Further, the RAM 12c is utilized as a so-called work area for storing data that is temporarily used when the CPU 12a performs various processes.

The auxiliary storage unit 12d corresponds to the auxiliary memory portion of the computer. The auxiliary storage unit 12d stores data used when the CPU 12a performs various processes or data generated in the process performed by the CPU 12a. As the auxiliary storage unit 12d, for example, an EEPROM, a HDD, an SSD, or the like may be used.

The application program stored in the ROM 12b or the auxiliary storage unit 12d includes a control program for controlling a control process to be described later. The transport and installation of the payment apparatus 12 is generally performed in the state where the control program is stored in the ROM 12b or the auxiliary storage unit 12d. However, the transport and installation of the payment apparatus 12 may be performed in the state where the control program is not stored in the ROM 12b or the auxiliary storage unit 12d in some cases. In this case, the control program is transferred to the payment apparatus 12 by being read from a removable recording medium such as a magnetic disk, a magneto-optical disk, an optical disk, and a semiconductor memory. Alternatively, the control program may be transferred through a network and then written into the auxiliary storage unit 12d of the payment apparatus 12.

The automatic change machine 12e receives and holds coins and bills that are input. Further, the automatic change machine 12e discharges coins and bills as change.

The scanner 12f reads the information on the merchandise, and obtains the merchandise code of the merchandise. As the scanner 12f, various known types of scanners may be used. The scanner 12f may correspond to only one of various known types, or may correspond to a plurality of types. The scanner 12f may be a two-dimensional code scanner of a fixed type or a moveable type. Alternatively, the scanner 12f may be a type that identifies the merchandise from the image of merchandise, according to an image recognition technique.

The touch panel 12g includes a display apparatus and a touch sensor. In the display apparatus, the display screen may display a certain screen such as a GUI screen. As the display apparatus, for example, a known device such as a color LCD may be used. The touch sensor is arranged to overlap the display surface of the display apparatus. The touch sensor detects the operator's touch position on the display surface of the display apparatus, and transmits the position information to the CPU 12a. As the touch sensor, a known device may be used.

The printer 12h issues a receipt by printing various characters and/or images on the receipt paper. As this type of printer, for example, a thermal printer, a dot impact printer, or the like may be used.

The card reader and writer 12i reads data recorded on the card and writes data into the card. The card may include a membership card referred to as a member's card or a point card, in addition to payment cards such as a credit card, a debit card, an electronic money card, and a prepaid card. The membership card has recorded information for identifying a member who owns the card. The card reader and writer 12i may be any one of devices of magnetic, contact, and contactless types, and may include a plurality of types of devices.

The communication unit 12j performs data communication with a plurality of merchandise registration apparatuses 11 which are connected through the network 13. The communication unit 12j can also perform data communication with other payment apparatuses 12 through the network 13.

The transmission system 12k transmits data items which are exchanged among the CPU 12a, the ROM 12b, the RAM 12c, the auxiliary storage unit 12d, the automatic change machine 12e, the scanner 12f, the touch panel 12g, the printer 12h, the card reader and writer 12i, and the communication unit 12j. As the transmission system 12k, a well-known transmission system including various buses such as a system bus and various interface circuits connecting the buses and respective units may be used.

As hardware of such payment apparatus 12, for example, a POS terminal which can deal with an existing self-service arrangement can be used.

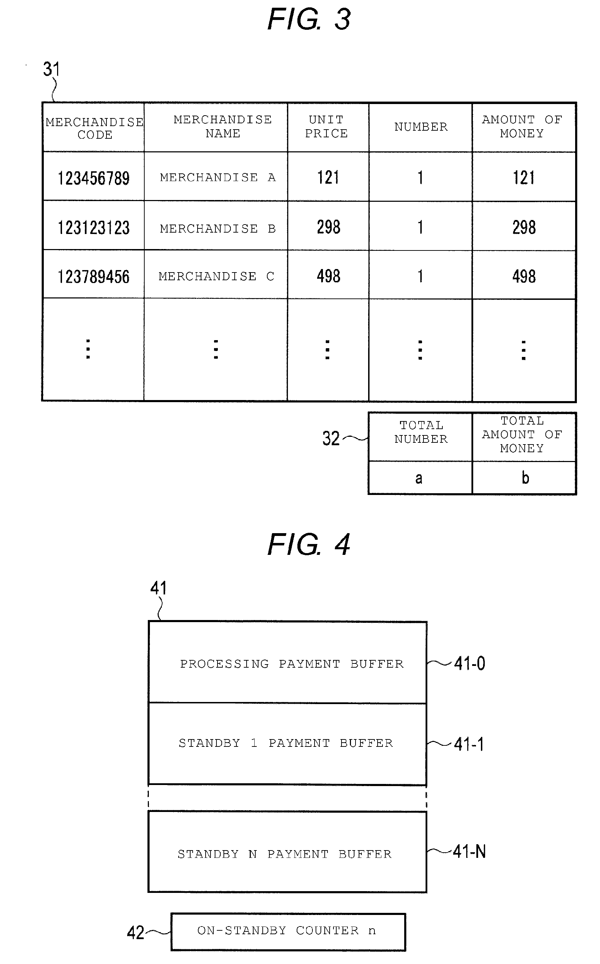

FIG. 3 is a schematic view illustrating a table 31 stored in the RAM 11c of the merchandise registration apparatus 11. As illustrated in FIG. 3, the table 31 stores a plurality of records each including a merchandise code, a merchandise name, a unit price, the quantity number, and the amount of money required for purchase. The merchandise code is a unique code for identifying each piece of merchandise individually. For example, a merchandise code which is represented by the bar code is assigned to each piece of merchandise. The merchandise name and the unit price are respectively the name and the price per a piece of the merchandise that is specified by the merchandise code on the same record. The quantity number and the amount of money are sales data of the merchandise that is specified by the merchandise code on the same record, in other words, the quantity and the amount of money for the quantity of the particular merchandise.

The check-out system 10 is connected to a database server through the network 13. The database server includes a merchandise database for setting merchandise information such as the merchandise name and the unit price, in association with the merchandise code of each piece of merchandise. In the merchandise registration apparatus 11, when the merchandise code is acquired, the CPU 11 a sends the merchandise code and a request for the merchandise information to the database server. The database server, which receives the request, accesses the merchandise database, reads the merchandise information which is associated with the merchandise code from the merchandise database, and transmits the merchandise information to the merchandise registration apparatus 11 through the network 13. The CPU 11 a of the merchandise registration apparatus 11 stores the merchandise information received from the database server in the table 31. In the following, the table 31 is referred to as the registration merchandise table 31.

The memory area 32 stores the total quantity number and the total amount of money. The total number is the sum of the quantity numbers indicated in the respective records stored in the registration merchandise table 31. The total amount of money is the sum of the amounts of money indicated in the respective records stored in the registration merchandise table 31. Hereinafter, the memory area 32 is referred to as a total table 32.

FIG. 4 is a schematic view illustrating buffer items stored in the RAM 12c of the payment apparatus 12. In FIG. 4, a memory area 41 is an area for temporarily storing the payment information which is received from the merchandise registration apparatus 11. The memory area 41 includes an area referred to as a processing payment buffer 41-0, and N (N>1) areas referred to as standby payment buffers 41-1 to 41-N to which identification data pieces from Standby 1 to Standby N are respectively assigned. The processing payment buffer 41-0 and the respective standby payment buffers 41-1 to 41-N are both capable of storing the payment information.

A memory area 42 is an area for a standby counter n. The standby counter n has an initial value of "0", and is counted up or down by "1" by the CPU 12a.

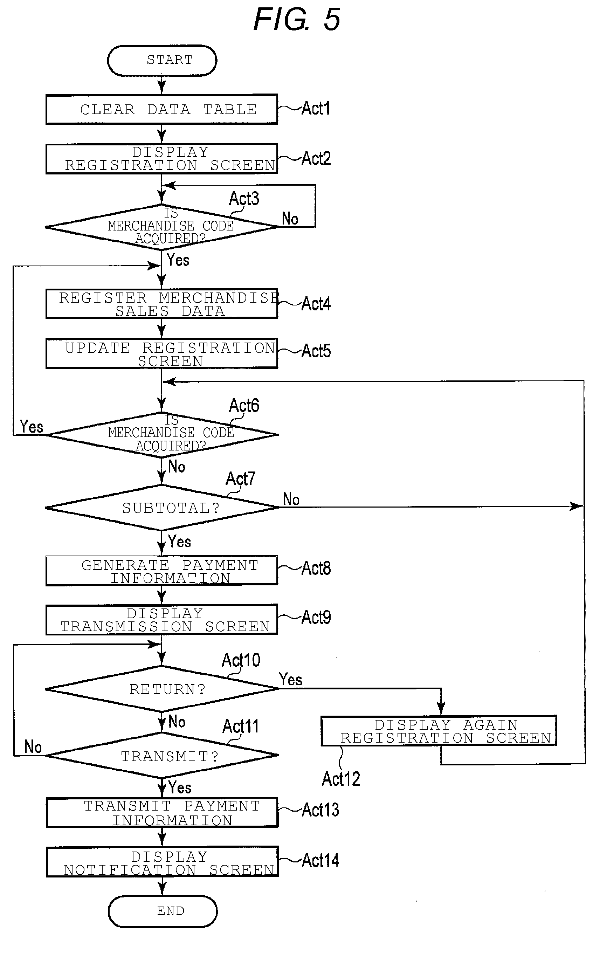

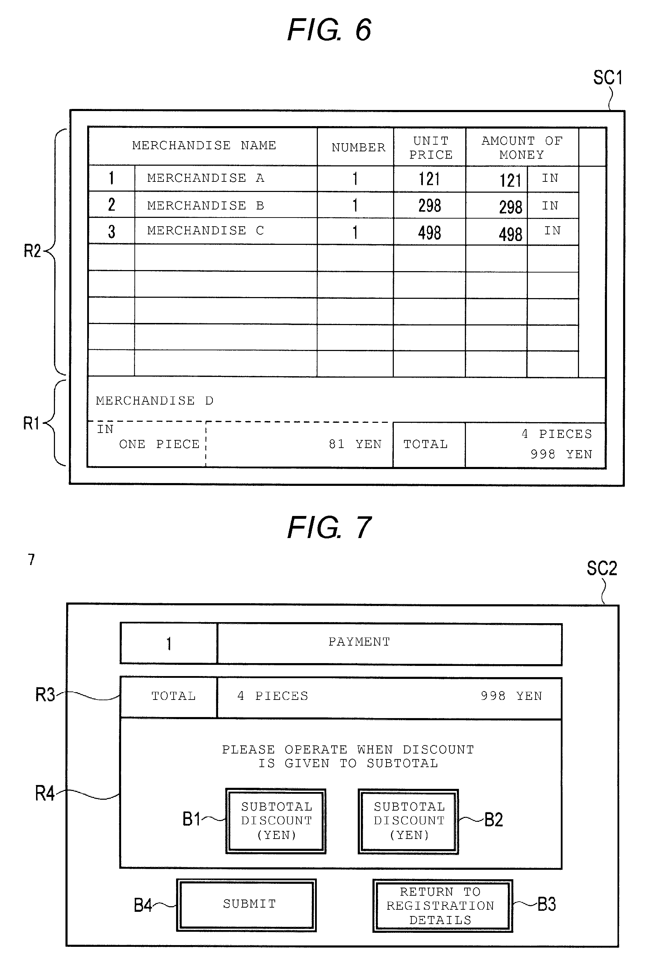

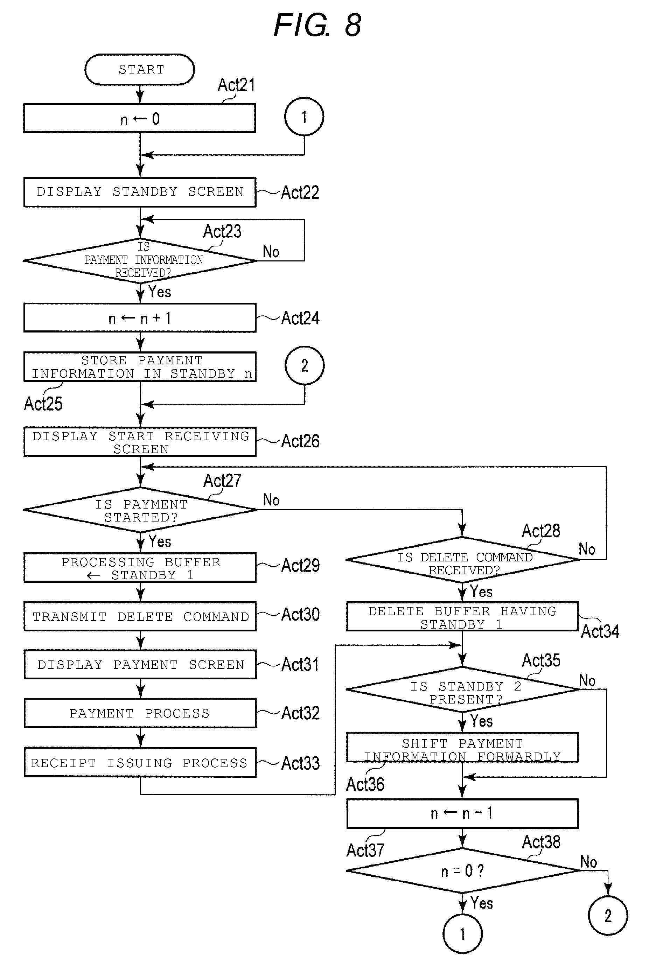

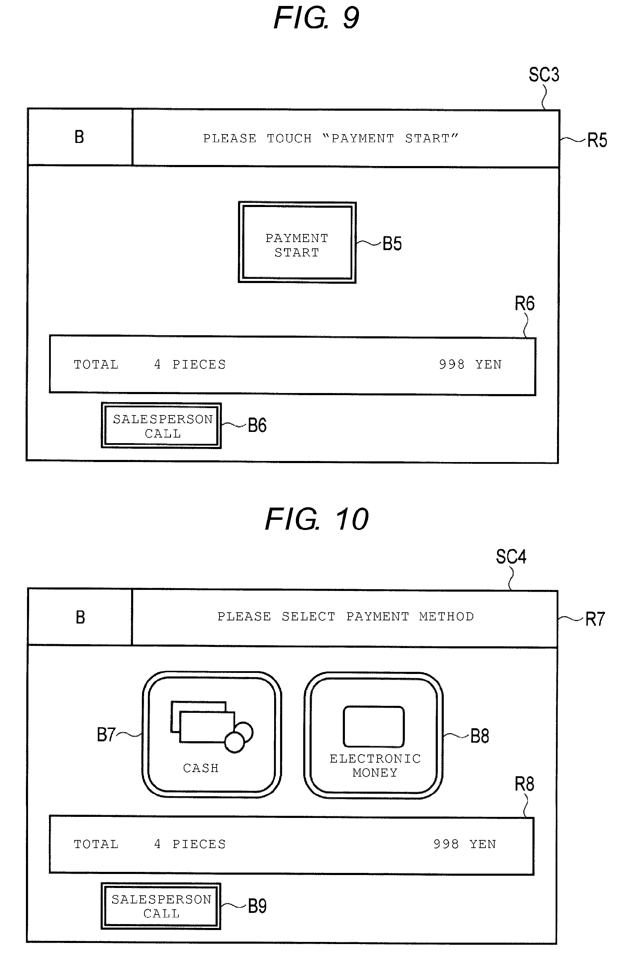

FIG. 5 is a flow chart illustrating an example sequence of operations performed by the CPU 11 a of the merchandise registration apparatus 11 in accordance with a control program. FIGS. 6 and 7 are schematic views illustrating examples of various screens displayed on a touch panel 11 g of the merchandise registration apparatus 11. FIG. 8 is a flow chart illustrating an example sequence of operations performed by the CPU 12a of the payment apparatus 12 in accordance with the control program. FIGS. 9 and 10 are schematic views illustrating examples of various screens displayed on the touch panel 12g of the payment apparatus 12. Hereinafter, the operation of the check-out system 10 will be described with reference to the drawings. Incidentally, the content of the processing to be described below is an example, and it is possible to appropriately utilize various processes capable of achieving the same result.

First, a description will be given regarding the operation of the merchandise registration apparatus 11.

When the merchandise registration apparatus 11 is activated in the mode of performing the registration process of merchandise selected by a shopper 22, the CPU 11 a starts the control process of the procedure illustrated in FIG. 5. First, the CPU 11 a clears the registration merchandise table 31 and the total table 32 (Act 1). Next, the CPU 11 a displays a registration screen SC1 on a portion of the screen of the touch panel 11 g (see FIG. 6) (Act 2).

The registration screen SC1 is intended to represent the contents of a registration merchandise table 31 a and a total table 32a, and allow the salesperson 21 to check the status of the registration process. An example of the registration screen SC1 is illustrated in FIG. 6. The registration screen SC1 includes display areas R1 and R2. The display area R1 displays the merchandise name, the number, and the unit price of the most recently registered merchandise, as well as the total number and the total amount of money of all of the merchandise currently registered. The display area R2 displays the list of merchandise names, the numbers, the unit prices, and the amounts of money of the merchandise that has been registered prior to the merchandise displayed on the registration screen SC1.

In addition, the CPU 11 a causes the touch panel 11 g to display various function buttons in an area other than the area of the registration screen SC1, such as a merchandise button by which the salesperson 21 designates the merchandise, or a subtotal button.

When the registration screen SC1 is displayed, the salesperson 21 sequentially inputs the merchandise codes of the merchandise that the shopper 22 purchases, by operating, for example, the scanner 11f and the merchandise button. Then, when the input of the merchandise codes of all of purchase merchandise is completed, the salesperson 21 touches the subtotal button.

The CPU 11 a which displays the registration screen SC1 waits for the acquisition of the merchandise code of the merchandise to be purchased (Act 3). When the merchandise code, which is input through the scanner 11f or the merchandise button, is acquired (YES at Act 3), the CPU 11 a acquires the merchandise information such as the merchandise name and the unit price, which is stored in the merchandise database in association with the merchandise code. The CPU 11 a multiplies the sales number by the unit price, and calculates the sales amount of money. The CPU 11 a registers merchandise sales data including the merchandise code, the merchandise name, the unit price, the number of sales, and sales amount of money as a one record, in the registration merchandise table 31 a (Act 4). Further, the CPU 11 a adds the sales number and the sales amount of money in the total table 32a. The CPU 11a updates the registration screen SC1 to correspond to the contents of the registration merchandise table 31 a and the total table 32a (Act 5).

After updating the registration screen SC1, the CPU 11a checks whether or not an additional merchandise code of merchandise to be purchased is acquired (Act 6). When the merchandise code is not acquired (NO at ACT 6), the CPU 11 a checks whether or not the subtotal button is touched (Act 7). When the subtotal button is not touched (NO at Act 7), the CPU 11 a checks again whether or not the merchandise code is acquired (Act 6). Therefore, the CPU 11 a waits for either the acquisition of an additional merchandise code or the touch of the subtotal button, as Act 6 and Act 7. In addition, the CPU 11a may check for the occurrence of other events such as execution of other operations, in the standby state herein, and then proceed to the process according to the occurred event.

In the standby state of Act 6 and Act 7, when the merchandise code is acquired (YES at Act 6), the CPU 11 a returns to the process of Act 4. The CPU 11 a repeats the following processing in the same manner as described above.

In the standby state of Act 6 and Act 7, when the subtotal button is touched (YES at Act 7), the CPU 11 a generates payment information based on the contents of the registration merchandise table 31 a and the total table 32a at this point of time (Act 8). In Act 8, the CPU 11 a functions as a generation unit. The CPU 11 a displays a transmission screen SC2 in a portion of the screen of the touch panel 11 g (see FIG. 7) (Act 9).

An example of the transmission screen SC2 is illustrated in FIG. 7. The transmission screen SC2 includes display areas R3 and R4, and buttons B1, B2, B3, and B4. The display area R3 displays the total quantity number and the total amount of money of the total table 32a. The display area R4 displays various messages. The buttons B1 and B2 are intended for the salesperson 21 to give a discount on the total amount of money. The button B3 is intended for the salesperson 21 to return to the registration screen SC1. The button B4 is intended for the salesperson 21 to transmit the payment information to the payment apparatus 12. In the following description, the button B3 is referred to as return button B3, and the button B4 is referred to as submit button B4.

When the transmission screen SC2 is displayed, the CPU 11 a checks whether or not the return button B3 is operated (Act 10). In a case where the return button B3 is not operated (NO at Act 10), the CPU 11 a checks whether or not the submit button B4 is operated (Act 11). In a case where the submit button B4 is not operated (NO at Act 11), the CPU 11 a again checks whether or not the return button B3 is operated (Act 10). Therefore, the CPU 11 a waits for the operation of the return button B3 or the submit button B4, as Act 10 and Act 11. In addition, the CPU 11 a may check for the occurrence of other events such as execution of other operations, and proceed to execute the process according to the occurred event. For example, when any of the buttons B1 and B2 is touched by the salesperson 21, the CPU 11 a changes the total amount of money which is included in the payment information, in response to the subsequent instruction by the salesperson 21.

In the standby state of Act 10 and Act 11, when the return button B3 is operated (YES at Act 10), the CPU 11 a returns a portion of the screen of the touch panel 11 g to the registration screen SC1 (Act 12). Thereafter, the CPU 11 a proceeds to the processing of Act 6, and repeats the following processing in the same manner as described above.

In the standby state of Act 10 and Act 11, when the submit button B4 is operated (YES at Act 11), the CPU 11 a transmits the payment information in parallel to all of the payment apparatuses 12 which are arranged in the same check-out lane as the merchandise registration apparatus 11 including the CPU 11a (In Act 13, the CPU 11a controls the communication unit 11j to function as a delivery unit.

Specifically, the CPU 11 a controls the communication unit 11j so as to transmit the payment information via the network 13. The communication addresses of each of the payment apparatuses 12 which are arranged in the same check-out lane as the merchandise registration apparatus 11 are stored as the destination addresses, and the communication address of the payment apparatus 12 is stored as the source address. Thus, payment information is transmitted to the destination address(es) of each payment apparatus 12 from the source address (i.e., the merchandise registration apparatus 11) through the network 13. In this case, the CPU 11 a may control the communication unit 11j to simultaneously transmit the payment information to each payment apparatus 12, or to transmit the payment information in time series at different times for each payment apparatus 12. The payment information is received by the payment apparatuses 12 corresponding to the destination addresses. Since the payment apparatus 12 that received the payment information stores the source address of the payment information, it is possible to specify the merchandise registration apparatus 11 which is the source of the payment information.

When the payment information is received, the CPU 11 a displays a notification screen on a portion of the screen of the touch panel 11 g (Act 14). The notification screen notifies the salesperson that the payment information is transmitted to the payment apparatus 12. A button by which the salesperson 21 instructs the close of the screen is displayed on the notification screen. The CPU 11 a ends the information processing for one transaction when the button is touched. Then, the CPU 11 resumes the processes from Act 1.

The salesperson 21 who checks the notification screen notifies the shopper 22 that payment is to be made in any of three (or any arbitrary number) payment apparatuses 12 which are provided in the same check-out lane. The shopper 22 who receives the announcement moves into an unoccupied payment apparatus 12, and performs an operation for payment.

Therefore, next, a description will be given regarding the operation of the payment apparatus 12.

When the payment apparatus 12 is started, the CPU 12a starts the control process of the procedure illustrated in the flowchart of FIG. 8. First, the CPU 12a initializes the standby counter n of the memory area 42 to "0" (Act 21). The CPU 12a displays the standby screen on the touch panel 12g (Act 22). The standby screen represents a state in which the payment process is not ready to be performed, and the information represented on the standby screen may be arbitrary. For example, it is assumed that the standby screen represents a message indicating that it is impossible to perform the payment process, or displays any image representing advertisement or the like as a screen saver.

The processing procedures of Act 21 and Act 22 are not limited to the procedure indicated in FIG. 8. For example, the process of Act 22 may first be performed, and the process of Act 21 may later be performed.

When the processes of Act 21 and Act 22 are completed, the CPU 12a waits for the reception of the payment information (Act 23).

As descried above, the CPU 11 a of the merchandise registration apparatus 11 transmits the payment information from the communication unit 11j via the network 13 in the process of Act 13 of FIG. 5. The payment information is received by the communication units 12j, which are provided in each of the payment apparatuses 12 located in the same check-out lane as that of the merchandise registration apparatus 11.

When the payment information is received (YES at Act 23), the CPU 12a increments the standby counter n by "1" (Act 24). The CPU 12a stores the received payment information in the standby payment buffer 41-n having the standby n as the identification data (n is the value of the standby counter n) (Act25). Thereafter, the CPU 12a controls the touch panel 12g to display a start receiving screen SC3 on a portion of the screen of the touch panel 12g (see FIG. 9) (Act 26).

An example of the start receiving screen SC3 is displayed in FIG. 9. The start receiving screen SC3 includes display areas R5 and R6, and buttons B5 and B6. The display area R5 displays operation guidance for the shopper 22 who operates the payment apparatus 12. The display area R6 displays the total number and the total amount of money, which are included in the payment information stored in the standby payment buffer 41-1 having Standby 1 as identification data. The button B5 is intended for the shopper 22 to start payment. The button B6 is intended for the shopper 22 to call the salesperson. In the following description, the button B5 is referred to as the payment start button B5, and the button B6 is referred to as a salesperson call button B6.

When the start receiving screen SC3 is displayed, the CPU 12a checks whether or not the payment start button B5 is operated (Act 27). In a case where the payment start button B5 is not operated (NO at Act 27), the CPU 12a checks whether or not the delete command is received from another payment apparatus 12 that is connected through the network 13 (Act 28). In a case where the delete command is not received (NO at Act 28), the CPU 12a checks again whether or not the payment start button B5 is operated (Act 27). Therefore, the CPU 12a waits for the operation of the payment start button B5 or the reception of the delete command, as Act 27 and Act 28. The CPU 12a may check the occurrence of other events, such as the execution of other operations, in the standby state in this case, and proceed to the processing according to the occurred event. For example, when the salesperson call button B6 is touched by the shopper 22, the CPU 12a controls the communication unit 12j so as to transmit a salesperson call command to the merchandise registration apparatus 11 that is provided in the same check-out lane as the payment apparatus 12.

In the standby state of Act 27 and Act 28, when the payment start button B5 is operated (YES at Act 27), the CPU 12a transfers the payment information that is stored in the standby payment buffer 41-1 having Standby 1 as identification data, into the processing payment buffer 41-0 (Act 29). Further, the CPU 12a controls the communication unit 12j so as to transmit the delete command to other payment apparatuses 12 that are provided in the same check-out lane as the payment apparatus 12 including the CPU 12a (Act 30: command unit).

Specifically, the CPU 12a controls the communication unit 12j so as to transmit the delete command via the network 13 to the communication addresses which are respectively set in other payment apparatuses 12 as the destination address. The communication address which is set in the payment apparatus 12 is the source address. In this manner, each delete command includes the destination address and the source address, which are set for each of other payment apparatuses 12, and the delete commands are transmitted through the network 13. The delete commands are received by the payment apparatus 12 for which the destination address coincides with the communication address. The payment apparatus 12 that receives the delete command can specify the payment apparatus 12 which is the source of the delete command, by storing the source address of the delete command.

In addition, the processing procedures of Act 29 and Act 30 are not limited to the procedure indicated in FIG. 8. For example, the process of Act 30 may first be executed, and the process of Act 29 may later be executed.

When the processes of Act 29 and Act 30 are completed, the CPU 12a displays a payment screen SC4 (see FIG. 10) on a portion of the screen of the touch panel 12g (Act 31).

FIG. 10 illustrates an example of the payment screen SC4. The payment screen SC4 includes display areas R7 and R8, and buttons B7, B8, and B9. The display area R7 displays operation guidance for the shopper 22 who operates the payment apparatus 12. The display area R8 displays the total quantity number and the total amount of money which are included in the payment information which is stored in the processing payment buffer 41-0. The button B7 is intended for the shopper 22 to designate cash as the payment method. The button B8 is intended for the shopper 22 to designate electronic money as the payment method. The button B9 is intended for the shopper 22 to call the salesperson 21. In the following description, the button B7 is referred to as a cash button B7, the button B8 is referred to as an electronic money button B8, and the button B9 is referred to as a salesperson call button B9.

The shopper 22 who checks the payment screen SC4 determines whether to pay in cash or in electronic money. In a case of paying in cash, the shopper touches the cash button B7, and puts cash of the total amount of money or more into the automatic change machine 12e. Meanwhile, in a case of paying in electronic money, the shopper touches the electronic money button B8 so as to cause the card reader and writer 12i to read the data in the electronic money card.

The CPU 12a that displays the payment screen SC4 waits for the touch of the cash button B7 or the electronic money button B8. When the cash button B7 or the electronic money button B8 is touched, the CPU 12a executes the payment process according to the payment method selected by the touched button (Act 32: payment unit). In other words, in a case where the cash button B7 is touched, the CPU 12a executes the payment process for the cash payment and, in a case where the electronic money button B8 is touched, the CPU 12a executes the payment process for the electronic money payment. Since these payment processes are well known in the existing self-service POS terminal, the description thereof will be omitted here.

Incidentally, the payment method is not limited to the cash or the electronic money. For example, the payment apparatus 12 can also deal with payment methods such as credit cards, and vouchers such as gift certificates.

When the payment process is ended, the CPU 12a executes a receipt issuing process (Act 33). In other words, the CPU 12a edits the print data of the receipt, based on the payment information that is stored in the processing payment buffer 41-0. The CPU 12a operates the printer 12h so as to issue a receipt. When the receipt is issued, the CPU12a proceeds to the process of Act 35.

Meanwhile, in the standby state of Act 27 and Act 28, when the delete command is received in the communication unit 12j (YES at Act 28), the CPU 12a deletes the payment information that is stored in the standby payment buffer 41-1 having Standby 1 as identification data (Act 34). Thus, the total number and the total amount of money that are displayed in the display area R6 of the start receiving screen SC3 are erased. Then, the CPU 12a proceeds to the process of Act 35.

In Act 35, the CPU 12a checks whether or not the payment information is stored in the standby payment buffer 41-2 having Standby 2 as identification data. If the payment information is not stored (NO at Act 35), the CPU 12a proceeds to the process of Act 37. In a case where the payment information is stored (YES at Act 35), the CPU 12a sequentially shifts the payment information pieces that are respectively stored in the standby payment buffers 41-2 to 41-N having Standby 2, Standby 3, ..., Standby N as respective pieces of identification data, into the standby payment buffers 41-1 to 41-(N-1) respectively having the identification data numbers which are decreased by "1" (Act 36). Then, the CPU 12a proceeds to the process of the Act 37.

In Act 37, the CPU 12a counts down the standby counter n by "1". The CPU 12a checks whether or not the standby counter n is the initial value "0" (Act 38). In a case where the standby counter n is not the initial value "0", in other words, the standby counter n is "1" or more (NO at Act 38), the CPU 12a proceeds to the process of Act 26, and the subsequent processes are repeated in a similar manner as in the described above. In a case where the standby counter n is the initial value "0" (YES at Act 38), the CPU 12a proceeds to the process of Act 22, and the subsequent processes are repeated in a similar manner as in the described above.

In this manner, in the check-out system 10 of the present embodiment, when the registration work of purchase merchandise by the salesperson 21 is ended in the merchandise registration apparatus 11, and the salesperson 21 touches the submit button B4 on the transmission screen SC2, the payment information containing the sales data of the purchase merchandise is delivered to all of the payment apparatuses 12 which are arranged in the same check-out lane as the merchandise registration apparatus 11. Therefore, the shopper 22 whose merchandise to be purchased has been registered can pay for the purchase merchandise, in any one of the payment apparatuses 12 to which the payment information is delivered. Therefore, the shopper performs payment by operating any of the unoccupied payment apparatuses 12, among the payment apparatuses 12 arranged in the same check-out lane. Hereinafter, such an effect will be described with reference to specific examples.

First, a check-out lane where there is no shopper who is performing payment is assumed. In addition, it is assumed that three payment apparatuses 12 (12-1, 12-2, and 12-3) are arranged in the check-out lane.

In such a case, a first shopper 22-1 comes to the cashier, and the salesperson 21 operates the merchandise registration apparatus 11 and registers the merchandise that the shopper 22-1 purchases. Then, when the registration is completed, the salesperson 21 touches the submit button B4. Then, the payment information for the shopper 22-1 is delivered from the merchandise registration apparatus 11 to the respective payment apparatuses 12-1, 12-2, and 12-3.

In the respective payment apparatuses 12-1, 12-2, and 12-3, the payment information is stored in the respective standby payment buffers 41-1 having Standby 1 as identification data. In addition, in the respective payment apparatuses 12-1, 12-2, and 12-3, the start receiving screen SC3 is displayed on the touch panel 12g, and the total number and the total amount of money, that are included in this payment information, are displayed in the display area R6 of this screen.

The salesperson 21 instructs the shopper 22-1 to operate the payment apparatuses 12-1, 12-2, and 12-3, and perform payment. In this case, the salesperson notifies that the shopper 22-1 may operate any of the unoccupied payment apparatuses 12-1, 12-2, and 12-3.

The shopper 22-1 who receives the instruction of payment moves to front of the unoccupied payment apparatus, for example, the payment apparatus 12-1, and touches the payment start button B5 which is displayed on the touch panel 12g. In this case, the shopper 22-1 can confirm that the total number and the total amount of money of the merchandise that the shopper purchases are displayed on the display area R6. In other words, the shopper 22-1 can recognize that payment can proceed for the shopper's own transaction.

When the shopper 22-1 touches the payment start button B5 in the payment apparatus 12-1, the payment information that is stored in the standby payment buffer 41-1 having Standby 1 as identification data is transferred to the processing payment buffer 41-0. As a result, in the payment apparatus 12-1, the payment process, the receipt issuing process, and the like, which are related to the payment information, are possible. The shopper 22-1 performs the payment by using cash, electronic money, or the like.

Further, when the shopper 22-1 touches the payment start button B5, the delete command is transmitted from the payment apparatus 12-1 to other payment apparatuses 12-2 and 12-3 which are provided in the same check-out lane. In other payment apparatuses 12-2 and 12-3 which receive the delete command, the payment information that is stored in the standby payment buffer 41-1 having Standby 1 as identification data is deleted. Therefore, the payment for the merchandise that the shopper 22-1 purchases cannot be performed in other payment apparatuses 12-2 and 12-3.

Next, in a case where a second shopper 22-2 comes to the cashier, the salesperson 21 operates the merchandise registration apparatus 11 and registers the merchandise that the shopper 22-2 purchases. Then, when the registration is completed, the salesperson 21 touches the submit button B4. Then, the payment information for the shopper 22-2 is delivered from the merchandise registration apparatus 11 to the respective payment apparatuses 12-1, 12-2, and 12-3. The payment information is stored in the standby payment buffer 41-1 having Standby 1 as identification code, in the respective payment apparatuses 12-1, 12-2, and 12-3.

Here, it is assumed that the shopper 22-1 still performs the payment by operating the payment apparatus 12-1. In this case, in the respective payment apparatuses 12-2, and 12-3 in which the payment process is not performed, the start receiving screen SC3 is displayed on the touch panel 12g, and the total number and the total amount of money, that are included in the payment information stored in the standby payment buffer 41-1, are displayed in the display area R6 of this screen. In the payment apparatus 12-1 in which the payment is being performed, the start receiving screen SC3 is not displayed on the touch panel 12g.

The salesperson 21 instructs the shopper 22-2 to operate any of the unoccupied payment apparatuses 12-1, 12-2, and 12-3 and perform payment.

The shopper 22-2 who receives the instruction of payment moves to front of the unoccupied payment apparatus, for example, the payment apparatus 12-2, and touches the payment start button B5 which is displayed on the touch panel 12g. In this case, the shopper 22-2 can confirm that the total number and the total amount of money of the merchandise that the shopper purchases are displayed on the display area R6.

When the shopper 22-2 touches the payment start button B5, in the payment apparatus 12-2, the payment information that is stored in the standby payment buffer 41-1 having Standby 1 as identification data is transferred to the processing payment buffer 41-0. As a result, in the payment apparatus 12-2, the payment process, the receipt issuing process, and the like, which are related to the payment information, are possible. The shopper 22-2 performs the payment by using cash, electronic money, or the like.

Further, when the shopper 22-2 touches the payment start button B5, the delete command is transmitted from the payment apparatus 12-2 to other payment apparatuses 12-1 and 12-3 which are provided in the same check-out lane. In other payment apparatuses 12-1 and 12-3 which receive the delete command, the payment information that is stored in the standby payment buffer 41-1 having Standby 1 as identification data is deleted. Therefore, the payment for the merchandise that the shopper 22-2 purchases cannot be performed in other payment apparatuses 12-1 and 12-3.

However, in a case where the salesperson 21 ends the registration work of the merchandise that the third shopper 22-3 purchases, and the submit button B4 is touched, before the second shopper 22-2 touches the payment start button B5, the payment information for the shopper 22-3 is delivered to the payment apparatuses 12-1, 12-2 and 12-3, respectively. The payment information is stored in the standby payment buffer 41-2 having Standby 2 as identification code, in the respective payment apparatuses 12-1, 12-2, and 12-3. In this case, since the start receiving screen SC3 for the second shopper 22-2 is displayed on the touch panel 12g of the unoccupied payment apparatus 12-3, the shopper 22-3 waits for switching of the screen. Whether or not the start receiving screen SC3 is made for the second shopper 22-2 can be identified based on the contents of the display area R6.

Thereafter, when the second shopper 22-2 touches the payment start button B5 in the payment apparatus 12-2, as described above, the delete command is transmitted from the payment apparatus 12-2 to other payment apparatuses 12-1 and 12-3. Further, in the payment apparatus 12-2, the payment information in the standby payment buffer 41-1 having Standby 1 as identification code is transferred to the processing payment buffer 41-0. As a result, in the respective payment apparatuses 12-1, 12-2, and 12-3, the payment information for the third shopper 22-3 is transferred from the standby payment buffer 41-2 having Standby 2 as identification code to the standby payment buffer 41-1 having Standby 1 as identification code.

Here, when it is assumed that the payment by the first and second shoppers 22-1 and 22-2 is not still completed, the apparatus in which the payment process is not performed is only the payment apparatus 12-3 (since the first and second shoppers 22-1 and 22-2 are using the payment apparatuses 12-1 and 12-2, respectively). Therefore, the start receiving screen SC3 is displayed only on the touch panel 12g of the payment apparatus 12-3. The total quantity number and the total amount of money, that are included in the payment information for the third shopper 22-3, are displayed in the display area R6 of this screen SC3.

The salesperson 21 instructs the shopper 22-3 to operate any of the unoccupied payment apparatuses 12-1, 12-2, and 12-3 and perform payment.

The shopper 22-3 who receives the instruction of payment moves to front of the unoccupied payment apparatus 12-3, and touches the payment start button B5 which is displayed on the touch panel 12g. In this case, the shopper 22-3 can confirm that the total number and the total amount of money of the merchandise that the shopper purchases are displayed on the display area R6.

When the shopper 22-3 touches the payment start button B5, in the payment apparatus 12-3, the payment information that is stored in the standby payment buffer 41-1 of Standby 1 is transferred to the processing payment buffer 41-0. As a result, in the payment apparatus 12-2, the payment process, the receipt issuing process, and the like, which are related to the payment information, are possible. The shopper 22-3 performs the payment by using cash, electronic money, or the like.

In this manner, according to the check-out system 10 according to the present embodiment, the merchandise registration apparatus 11 transmits the payment information to all of the payment apparatuses 12, regardless of the state of each payment apparatus 12. Therefore, an information analysis function of collecting and analyzing state information (status) from the payment apparatus 12 is not required.

In addition, since the salesperson 21 operating the merchandise registration apparatus 11 does not have trouble in finding an unoccupied payment apparatus 12, it is possible to increase the work efficiency of the salesperson 21. There is no mistake that the salesperson erroneously transmits the payment information to the payment apparatus 12 which is not intended.

In addition, embodiments are not limited to the embodiment described herein.

For example, the embodiment describes a case where one check-out lane is used as a unit and the merchandise registration apparatus 11 which is arranged in the lane delivers the payment information to all of the payment apparatuses 12 which are arranged in the same lane. In another example, two adjacent check-out lanes may be used as a unit and the merchandise registration apparatuses 11 which are arranged in the respective lanes may deliver the payment information to all of the payment apparatuses 12 which are arranged in the adjacent lane.

In this case, the standby payment buffers 41-1 to 41-N, which are formed in the RAM 12c of each payment apparatus 12, are divided into two types for a first lane and for a second lane. In addition, a payment start button B5 for the first lane and the payment start button B5 for the second lane are displayed on the start receiving screen SC3. Each payment apparatus 12 stores the payment information which is delivered from the merchandise registration apparatus 11 of one lane (first lane), among two adjacent check-out lanes, in the standby payment buffers 41-1 to 41-N for the first lane, and stores the payment information which is delivered from the merchandise registration apparatus 11 of the other lane (second lane) in the standby payment buffers 41-1 to 41-N for the second lane. Then, when the payment start button B5 for the first lane is touched, the CPU 12a transfers the payment information in the standby payment buffer 41-1 having Standby 1 for the first lane as identification code, to the processing payment buffer 41-0. When the payment start button B5 for the second lane is touched, the CPU 12a transfers the payment information in the standby payment buffer 41-1 having Standby 1 for the second lane as identification code, to the processing payment buffer 41-0.

With such a configuration, it is possible to apply the operation with two adjacent check-out lanes as a unit.

Further, the embodiment describes a case where when the shopper 22 who performs payment touches the payment start button B5, the payment apparatus 12 receives an instruction to start payment which is input by the operator (shopper). A unit that receives instruction input is not limited thereto. For example, in the process of Act 26 in FIG. 8, a payment screen SC4 is displayed on the touch panel 12g instead of the start receiving screen SC3. Then, in the process of Act 27, when the cash button B7 or the electronic money button B8 is touched, the CPU 12a performs the processes of Act 29, Act 30, Act 32, and Act 33. In this way, the control program may be modified. In this case, since the operation of touching the payment start button B5 is not required, there is an advantage capable of simplifying the operation of the shopper 22.

In addition, although the description of the embodiment is made with the act of purchasing merchandise as a transaction, the transaction may not involve acts of purchasing merchandise. For example, the check-out system may be applicable to transactions for which provided services are charged, such as use fee for facilities, rental fee for items.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the frameworkof the inventions. The accompanying claims and their equivalents are intended to cover such forms or modifications as would fall within the scope of the inventions.

## Claims

1. A check-out system comprising:
a registration apparatus (11); and
a plurality of payment apparatuses (12) in communication with each other and with the registration apparatus, wherein
the registration apparatus includes:
a registration input apparatus (11f, 11g) configured to receive input of data corresponding to an item for a transaction; and
a registration processor (11a) configured to generate payment information for the transaction based on the input data and to cause the payment information to be transmitted to each of the payment apparatuses, and
each of the payment apparatuses includes:
a storage unit (12c, 12d) configured to store the payment information received from the registration apparatus;
a payment input apparatus (12g) configured to receive an instruction from an operator to start payment processing; and
a payment processor (12a) configured to:
in response to the instruction received in the payment input apparatus, process a payment in accordance with the payment information stored in the storage unit, and send a delete instruction to each of the other payment apparatuses to delete the payment information from the respective storage units, and
delete the payment information stored in the storage unit when the delete command is received from one of the other payment apparatuses of the system.

2. The check-out system according to claim 1, wherein the storage unit sequentially stores different payment information in the storage area in an ascending order of reception time.

3. The check-out system according to claim 2, wherein the payment processor processes payment for the payment information having an earliest reception time among the reception times of the different payment information stored in the storage unit.

4. The check-out system according to claim 2, wherein the payment processor deletes the payment information having an earliest reception time among the reception times of the different payment information stored in the storage unit, in response to the delete command being received.

5. The check-out system according to claim 1, wherein the plurality of payment apparatuses are in communication with each other and with the registration apparatus via a network.

6. The check-out system according to claim 1, wherein the payment processor stores a destination address of the other payment apparatuses receiving the payment information.

7. The check-out system according to claim 1, wherein the registration input apparatus is one of a code scanner and an image recognition scanner.

8. The check-out system according to claim 1, wherein the payment information is transmitted to each of the payment apparatuses in parallel.

9. A payment apparatus for use in a check-out system including a plurality of the payment apparatuses in communication with each other and with a registration apparatus, the payment apparatus including:
a storage unit configured to store payment information for a transaction received from the registration apparatus;
an input apparatus configured to receive an instruction from an operator to start payment processing; and
a payment processor configured to:
in response to the instruction received in the input apparatus, process a payment in accordance with the payment information stored in the storage unit, and send a delete instruction to each of the other payment apparatuses in the check-out system to delete the payment information from the respective storage units, and
delete the payment information stored in the storage unit when a delete command is received from one of the other payment apparatuses of the check-out system.

10. The payment apparatus according to claim 9, wherein the storage unit sequentially stores different payment information in the storage area in an ascending order of reception time.

11. The payment apparatus according to claim 10, wherein the payment processor processes payment for the payment information having an earliest reception time among the reception times of the different payment information stored in the storage unit.

12. The payment apparatus according to claim 10, wherein the payment processor deletes the payment information having an earliest reception time among the reception times of the different payment information stored in the storage unit, in response to the delete command being received.

13. The payment apparatus according to claim 9, wherein the payment apparatus is in communication with the plurality of payment apparatuses and with the registration apparatus in the system via a network.

14. The payment apparatus according to claim 9, wherein the payment processor stores a destination address of the other payment apparatuses receiving the payment information.

15. A non-transitory computer readable medium containing instructions for a payment apparatus in a system including a plurality of the payment apparatuses in communication with each other and with a registration apparatus, the instructions causing the payment apparatus to perform the steps of:
storing payment information for a transaction received from the registration apparatus;
receiving an instruction from an operator to start payment processing;
in response to receiving the instruction, processing a payment in accordance with the stored payment information, and sending a delete instruction to each of the other payment apparatuses in the system to delete the payment information; and
deleting the payment information when a delete command is received from one of the other payment apparatuses of the system.
